**Europäisches Patentamt**

**European Patent Office**

**Office européen des brevets**

(19)

(11) Veröffentlichungsnummer : **0 195 876**
**B1**

(12) **EUROPÄISCHE PATENTSCHRIFT**

(45) Veröffentlichungstag der Patentschrift :
**01.02.89**

(21) Anmeldenummer : **85810127.2**

(22) Anmeldetag : **25.03.85**

(51) Int. Cl.⁴ : **G 01 L 1/10, G 01 G 3/16,
G 01 G 21/16, G 01 G 21/23**

(54) **Massen- und Kraftmessgerät.**

(43) Veröffentlichungstag der Anmeldung :
**01.10.86 Patentblatt 86/40**

(45) Bekanntmachung des Hinweises auf die Patenterteilung : **01.02.89 Patentblatt 89/05**

(84) Benannte Vertragsstaaten :
**AT BE CH DE FR GB IT LI NL SE**

(56) Entgegenhaltungen :
**EP-A- 0 003 222**
**EP-A- 0 003 473**
**DE-B- 2 744 328**
**GB-A- 2 142 430**
**US-A- 3 423 999**
**US-A- 4 088 198**

(73) Patentinhaber : **K-TRON Patent AG**
**Limmatquai 3**
**CH-8001 Zürich (CH)**

(72) Erfinder : **Saner, Kaspar**
**Chrummacher 2**
**CH-8600 Dübendorf (CH)**

(74) Vertreter : **Eder, Carl E. et al**
**Patentanwaltsbüro EDER AG Münchensteinerstrasse
2**
**CH-4052 Basel (CH)**

## Beschreibung

Die vorliegende Erfindung bezieht sich auf ein Massen- und Kraftmessgerät gemäss dem Oberbegriff des Anspruchs 1.

Massen- und Kraftmessgeräte mit einem zum weglosen Messen ausgestalteten oder, kurz gesagt, weglosen Messystem sind zum Beispiel aus der US-A-3 423 999 bekannt und werden auch gefesselte Waagen genannt. Wird bei solchen Geräten dass Messystem entfernt, so bilden sie ein kinematisches System mit einem einzigen Freiheitsgrad. Unter einem weglosen Messystem versteht man ein solches, bei welchem die vom Messystem zugelassene Bewegung virtuell ist. Solche Messysteme besitzen beispielsweise mindestens eine schwingende Saite oder einen Dehnungsmessstreifen und eine dazu passende Elektronik.

Die Mittel zur Übertragung der Last auf das Messystem weisen meistens mindestens einen Hebel auf, der die Last untersetzt überträgt. Ein solcher Hebel ist z. B. aus der US-A-4-088 198 bekannt, wobei dieser Hebel über verhältnismäs-·sig grosse Dreh- bzw. Schwenkbewegungen zulassende Schneiden und Pfannen abgestützt und mit dem Lastträger sowie Messystem verbunden ist.

In der EP-A-3 222 sind Massen- und Kraftmessgeräte mit einem Gestell, einem Lastträger, einem weglos messenden Messystem und zum Übertragen der zu messenden Kraft vom Lastträger auf das Messystem dienenden Übertragungsmitteln offenbart. Die letzteren weisen einen Hebel, nämlich einen Winkelhebel, und bei gewissen Varianten zusätzlich noch einen geraden Hebel auf. Die Hebel sind über Gelenke am Gestell des betreffenden Gerätes gehalten. Bei der zuerst beschriebenen, nur einen Winkelhebel aufweisenden Variante ist dieser über eine bei beiden Enden je ein Biegegelenk aufweisende Druckstelze mit dem Lastträger verbunden. Bei den zusätzlich noch einen geraden Hebel aufweisenden Varianten ist dieser gerade Hebel über eine Zugstange und zwei Gelenke, von denen jedes bei einem Ende der Zugstange angeordnet ist, mit dem Lastträger verbunden.

Wenn mit einem Hebel eine Untersetzung der vom Lastträger auf das Messystem übertragenen Kraft ermöglicht werden soll und dabei ein grosses Untersetzungsverhältnis angestrebt wird, muss auch das Verhältnis zwischen der Länge des mit dem Messystem verbundenen Ausgangs-Hebelarms und der Länge des mit dem Lastträger verbundenen Eingangs-Hebelarms entsprechend gross sein. Schneiden und Pfannen aufweisende Gelenke, wie sie beispielsweise aus der bereits zitierten US-A-4 088 198 bekannt sind, haben den Nachteil, dass zur Bildung jedes Gelenkes mehrere Teile erforderlich sind und dass die Gelenke sowie deren Verbindungen mit den Hebeln verhältnismässig viel Platz beanspruchen. In der ebenfalls bereits zitierten EP-A-3 222 sind die Verbindungen der Gelenke mit den Hebeln nicht näher offenbart. Man mag jedoch annehmen, dass die Gelenke wie es von anderen Biegegelenk-Verbindungen her bekannt ist, in ·irgend einer Weise in den Hebeln eingespannt und/oder durch Schrauben mit den Hebeln verbunden sind. Solche bekannte Biegegelenk-Befestigungen oder -Verbindungen benötigen jedoch ebenfalls relativ viel Platz, wobei zudem unter Umständen die Lagen der Schwenkachsen der Gelenke nicht genau definiert sind. Bei den bekannten Gelenken und/oder Gelenk-Verbindungen muss daher zwischen zwei Gelenken, die einen Hebel mit dem Gestell bzw. dem Lastträger verbinden, ein relativ grosser Mindestabstand vorhanden und der Eingangs-Hebelarm dementsprechend verhältnismässig lang sein, was die nachteilige Folge hat, dass die Länge des ganzen Hebels und damit auch mindestens die in der entsprechenden Richtung gemessene Abmessung des ganzen Massen- und Kraftmessgeräts verhältnismässig gross wird.

Der Erfindung liegt daher die Aufgabe zugrunde, ein Massen- und Kraftmessgerät zu schaffen, bei dem der Hebel in einer einen möglichst kurzen Eingangs-Hebelarm zulassenden ·Weise durch Gelenke mit dem Gestell und dem Lastträger verbunden ist, ohne dass dadurch die Qualität, d. h. die Genauigkeit der Übertragung und/oder des Untersetzungsverhältnisses vermindert wird. Dabei soll das Gerät auch bei mittleren oder kleinen Herstellungsserien wirtschaftlich herstellbar sein.

Diese Aufgabe wird ausgehend vom aus der EP-A-3 222 bekannten Stand der Technik durch ein Massen- und Kraftmessgerät gelöst, das erfindungsgemäss die Merkmale des Anspruchs 1 aufweist.

In der beiliegenden Zeichnung sind Ausführungsbeispiele des Erfindungsgegenstandes schematisch dargestellt. Es zeigen :

Fig. 1 eine erste Ausführung,
Fig. 2, 3 je eine Scheibe,
Fig. 4, 5 je eine Variante zu Fig. 2, 3,
Fig. 6 eine zweite Ausführung, und
Fig. 7 die Scheibe der Ausführung nach Fig. 6.

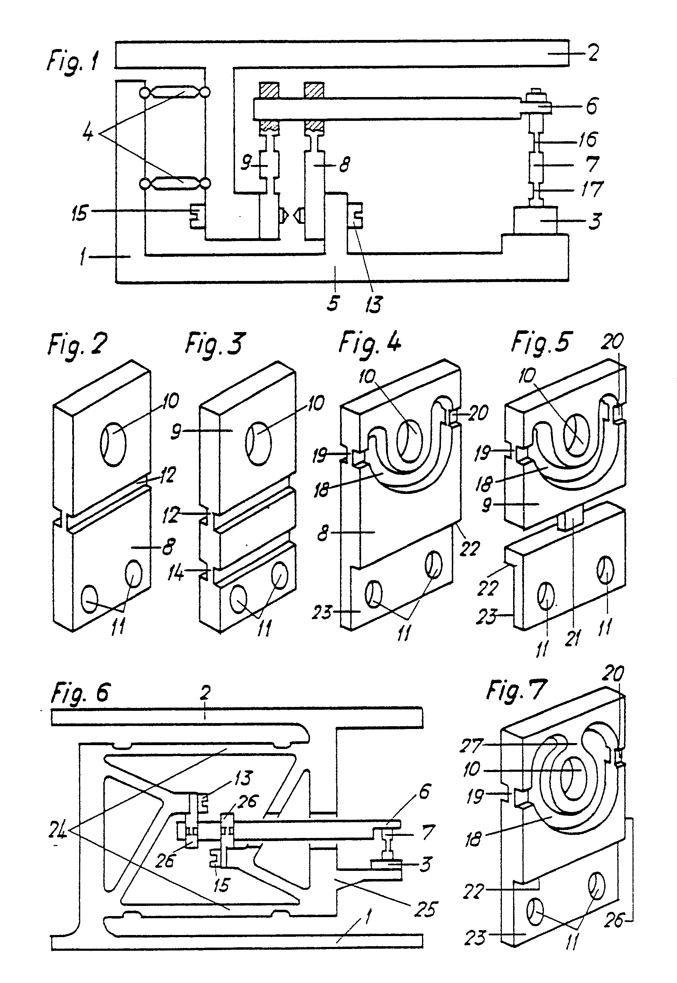

In Fig. 1-3 ist ein erstes Ausführungsbeispiel dargestellt. Das Gerät weist ein Gestell 1, einen Lastträger 2 und ein am Gestell 1 befestigtes Messystem 3 auf. Der Lastträger ist mittels Lenker 4 parallel und senkrecht geführt. An einem Träger 5 des Gestelles 1 ist ein Hebel 6 schwenkbar gelagert. An seinem linken Ende ist der Hebel 6 mit dem Lastträger 2 verbunden. Er wirkt über eine an seinem rechten Ende befestigten Stelze 7 auf den Eingang des Messystems 3.

Der Hebel 6 ist mit zwei Scheiben 8 und 9 versehen. Die Scheibe 8 (Fig. 2) besteht aus einer flachen, im wesentlichen rechteckigen Platte mit einer oberen Bohrung 10, zwei unteren, vorzugsweise mit einem Gewinde versehenen Bohrungen 11 und zwei ein vertikales Bandgelenk 12 bildende, horizontal angeordnete Nuten auf. Die Scheibe 8 ist über die Bohrung 10 auf dem Hebel 6 dreh- und verschiebungsfest, d. h. im sog. Pressitz, montiert. Sie ist mittels Schrauben 13 am Träger 5 des Gestelles 1 befestigt. Die Scheibe 9 (Fig. 3) ist wie, die Scheibe 8 ausgebildet, weist aber ein zweites Bandgelenk 14 auf. Der Abstand der Bandgelenke 12 zur Mitte der Bohrung 10 ist der gleiche für beide Scheiben 8, 9. Die Scheibe 9 sitzt dreh- und verschiebungsfest auf dem Hebel 6. Sie ist mittels Schrauben 15 an dem Lastträger 2 befestigt.

Die Stelze 7 weist zwei je ein Gelenk bildende Verjüngungen 16, 17 auf. Sie ist an ihrem oberen Ende an dem Hebel 6 und an ihrem unteren Ende an dem Eingang des Messystems 3 befestigt. Sie wirkt somit als Zugstange. Die Verjüngung 16 ist derart angeordnet, dass ihr Abstand zur Längsachse des Hebels 6 der gleiche ist wie der Abstand des Bandgelenkes 12 zur Mitte der Bohrung 10.

Das beschriebene Gerät funktioniert wie folgt. Wird eine Masse auf den Lastträger 2 gelegt, so wird deren Gewicht über die als Zugelement wirkende Scheibe 9 auf den Hebel 6 übertragen. Das Bandgelenk 12 wirkt dabei als Primärgelenk und das Bandgelenk 14 als Sekundärgelenk. Der Hebel 6 wird um das Bandgelenk 12 der Scheibe 8 verschwenkt. Es handelt sich hier wohlverstanden um eine virtuelle Schwenkung. Die Stelze 7 überträgt die sog. Messkraft auf das Messystem 3. Die Verjüngung 16 wirkt als Primärgelenk, die Verjüngung 17 als Sekundärgelenk.

In Fig. 4, 5 ist eine Variante der Ausbildung der Scheiben nach Fig. 2, 3 dargestellt. Am oberen Ende der Scheiben 8, 9 ist ein halbkreisförmiger Schlitz 18 vorgesehen. An beiden Seiten des Schlitzes 18 sind je zwei horizontale Nuten vorgesehen, die zwei Bandgelenke 19, 20 bilden. Dieses Bandgelenkpaar 19, 20 entspricht dem Bandgelenk 12 der Fig. 2, 3, befindet sich aber in der horizontalen Ebene durch die Längsachse des Hebels 6. Das zweite, als Sekundärgelenk wirkende Bandgelenk 14 der Scheibe 9 der Fig. 3 ist in der Ausführung der Fig. 5 durch ein zungenförmiges Bandgelenk 21 ersetzt, das eine erhöhte Nachgiebigkeit in Bezug auf Biege- und Torsionsmomente aufweist.

Der untere Teil beider Scheiben 8, 9 nach Fig. 4, 5 hat vom Absatz 22 an eine um die Hälfte reduzierte Dicke. Die Ebene 23 dieser unteren Teile verläuft durch die Mitte der Bandgelenke 19, 20 bzw. 19, 20 und 21. Es versteht sich, dass die Scheiben 8, 9 gegenseitig umgetauscht werden könnten.

In Fig. 6 ist ein Ausführungsbeispiel dargestellt, bei welchem der Lastträger 2 mittels Parallellenker 24 senkrecht und parallel geführt ist. Das Messystem 3 ist an einem Arm 25 des Lastträgers 2 befestigt. Der Hebel 6 ist mit zwei Scheiben 26 versehen. Mit dem Gestell 1 ist er mittels der ersten Scheibe 26 verbunden. Ueber die zweite Scheibe 26 ist er mit dem Lastträger 2 verbunden. In diesem Ausführungsbeispiel sind beide Scheiben 26 identisch ausgeführt. Das rechte Ende des Hebels 6 (wie in Fig. 6 gesehen) ist über eine schematisch dargestellte, als Druckstange wirkende, Stelze 7 mit dem Messystem 3 verbunden.

In Fig. 7 ist die Scheibe 26 dargestellt. Der Schlitz 18 der Ausführung nach Fig. 4, 5 ist im Falle der Scheibe 26 nicht mehr halbkreisförmig, sondern fast ganz kreisförmig, sodass die entstehende, als Primärgelenk wirkende Zunge 27 eine Breite hat, die im wesentlichen der Dicke der Scheibe 26 entspricht. Der Schlitz 18 und die Bohrung 10 sind konzentrisch. Die übrigen Elemente sind wie mit Bezug auf Fig. 4 beschrieben. Die Zunge 27 könnte gegebenenfalls auch wie das Gelenk 21 (Fig. 5) ausgebildet werden, d. h. dünner als die Scheibe 26 selbst sein.

Bei dieser Ausbildung der Scheiben 26 liegen somit die durch die Zunge 27 gebildeten Primärgelenke ausserhalb der horizontalen Ebene durch die Achse des Hebels 6, während die Sekundärgelenkpaare 19, 20 in dieser Ebene liegen. Beide Scheiben 26 können als elastische Zugelemente gleicher Quernachgiebigkeit angesehen werden. Es ist für den Fachmann leicht zu errechnen, dass Dehnungen der Parallellenker 24 im wesentlichen keinen Einfluss auf das Uebersetzungsverhältnis erzeugen. Wenn eine niedrige Höhe des ganzen Gerätes notwendig ist, so ist diese Ausführung vorteilhaft.

In den dargestellten Ausführungsbeispielen liegen die Bandgelenke 12, 14, 19, 20 in der mittleren Ebene der Scheiben. Sie könnten aber auch in Bezug auf diese Ebene versetzt angeordnet werden, wodurch die Länge des wirksamen Eingangsarmes des Hebels 6 noch reduziert werden kann.

Bei den Scheiben mit zwei Gelenken sind diese vorgängig als Primärgelenk und Sekundärgelenk bezeichnet. Zur Klarstellung sei noch darauf hingewiesen, dass gemäss der Zeichnung jeweils das sich in Bezug auf den Kraftfluss oder die Kraftübertragung durch die Scheibe am nächsten beim mit dem Hebel verbundenen Scheibenabschnitt befindende Gelenk das Primärgelenk und das andere, im genannten Sinn weiter vom Hebel entfernte Gelenk das Sekundärgelenk bildet.

**Patentansprüche**

1. Massen- und Kraftmessgerät mit einem Gestell (1), einem senkrecht und parallel geführten Lastträger (2), einem zum weglosen Messen ausgebildeten Messystem (3) und einen Hebel (6) aufweisenden Mitteln (6 bis 9, bzw. 26) zur Übertragung der zu messenden Kraft auf das Messystem (3), wobei der Hebel (6) über mindestens ein Gelenk (12, 19, 20, 27) mit dem Gestell (1) und über mindestens zwei Gelenke (12, 14, 19, 20, 21, 27) mit dem Lastträger (2) verbunden ist, dadurch gekennzeichnet, dass das mindestens eine, den Hebel (6) mit dem Gestell (1) verbindende Gelenk (12, 19, 20, 27) durch einen Abschnitt einer ersten, dreh- und verschiebungsfest auf dem Hebel (6) montierten Scheibe (8, 26) und die mindestens zwei den Hebel (6) mit dem Lastträger verbindenden Gelenke (12, 14, 19, 20, 21, 27) durch Abschnitte einer zweiten, dreh- und verschiebungsfest auf dem Hebel (6) montierten Scheibe (9, 26) gebildet sind.

2. Massen- und Kraftmessgerät nach Anspruch 1, dadurch gekennzeichnet, dass die erste und die zweite Scheibe (8, 9 bzw. 26) je durch einen von ihnen und dem Hebel (6) gebildeten Pressitz auf dem Hebel (6) befestigt sind.

3. Massen- und Kraftmessgerät nach Anspruch 2, dadurch gekennzeichnet, dass jede Scheibe (8, 9, 26) eine einen Abschnitt des Hebels (6) aufnehmende und mit diesem Hebelabschnitt zusammen den betreffenden Pressitz bildende Bohrung (10) und mindestens eine andere Bohrung (11) für ihre Befestigung am Gestell (1) bzw. Lastträger (2) aufweist.

4. Massen- und Kraftmessgerät nach einem der Ansprüche 1 bis 3, dadurch gekennzeichnet, dass die erste Scheibe (8) ein einziges horizontal angeordnetes Bandgelenk (12) aufweist.

5. Massen- und Kraftmessgerät nach Anspruch 4, dadurch gekennzeichnet, dass die zweite Scheibe (9) zwei parallele, horizontal angeordnete Bandgelenke (12, 14) aufweist.

6. Massen- und Kraftmessgerät nach Anspruch 3, dadurch gekennzeichnet, dass beide Scheiben (8, 9 bzw. 26) einen Schlitz (18) aufweisen, der sich um die genannte Bohrung (10) um mindestens 180° erstreckt und dass sie mit einem Bandgelenkpaar (19, 20) versehen sind, dessen gemeinsame horizontale Achse durch die Mitte der genannten Bohrung (10) verläuft und in der horizontalen Ebene durch die Achse des Hebels (6) liegt.

7. Massen- und Kraftmessgerät nach Anspruch 6, dadurch gekennzeichnet, dass die zweite Scheibe (9 bzw. 26) zusätzlich zu den vom genannten Bandgelenkpaar (19, 20) gebildeten ersten Gelenk noch ein zweites, zungenförmiges Gelenk (21 bzw. 27) aufweist.

8. Massen- und Kraftmessgerät nach Anspruch 7, dadurch gekennzeichnet, dass sich das zweite Gelenk (21 bzw. 27) ausserhalb der horizontalen Ebene durch die Achse des Hebels befindet.

9. Massen- und Kraftmessgerät nach Anspruch 7 oder 8, dadurch gekennzeichnet, dass sich das zweite Gelenk (27) in Bezug auf den Kraftfluss durch die betreffende Scheibe (26) hindurch näher beim Hebel (6) befindet als das erste Gelenk (19, 20).

10. Massen- und Kraftmessgerät nach Anspruch 7 oder 8, dadurch gekennzeichnet, dass das zweite Gelenk (21) in Bezug auf den Kraftfluss durch die betreffende Scheibe (9) hindurch weiter vom Hebel (6) entfernt ist als das erste Gelenk (19, 20).

11. Massen- und Kraftmessgerät nach einem der Ansprüche 1 bis 10, dadurch gekennzeichnet, dass jede Scheibe (8, 9 bzw. 26) aus einer einstückigen Platte besteht.

## Claims

1. Mass-measuring and force-measuring device with a frame (1), a vertically and parallelly guided load carrier (2), a measuring system (3) constructed for the travel-free measurement and means (6 to 9 or 26) displaying a lever (6) for the transmission of the force to be measured to the measuring system (3), wherein the lever (6) is connected by way of at least one hinge (12, 19, 20, 27) with the frame (1) and by way of at least two hinges (12, 14, 19, 20, 21, 27) with the load carrier (2), characterised thereby, that the at least one hinge (12, 19, 20, 21, 27) connecting the lever (6) with the frame (1) is formed by a portion of a first plate (8, 26) mounted on the lever (6) to be secure against rotation and displacement and the at least two hinges (12, 14, 19, 20, 27) connecting the lever (6) with the load carrier are formed by portions of a second plate (9, 26) mounted on the lever (6) to be secure against rotation and displacement.

2. Mass-measuring and force-measuring device according to claim 1, characterised thereby, that the first and the second plate (8, 9 or 26) are each fastened on the lever (6) formed by a press fit formed by them and the lever (6).

3. Mass-measuring and force-measuring device according to claim 2, characterised thereby, that each plate (8, 9, 26) displays one bore (10) receiving a portion of the lever (6) and together with this lever portion forming the press fit concerned and at least another bore (11) for its fastening at the frame (1) or load carrier (2).

4. Mass-measuring and force-measuring device according to one of the claims 1 to 3, characterised thereby, that the first plate (8) displays a single horizontally arranged tape hinge (12).

5. Mass-measuring and force-measuring device according to claim 4, characterised thereby, that the second plate (9) displays two parallel, horizontally arranged tape hinges (12, 14).

6. Mass-measuring and force-measuring device according to claim 3, characterised thereby, that both plates (8, 9 or 26) display a slot (18), which extends through at least 180° around the named bore (10) and that they are provided with a tape hinge pair (19, 20), the common horizontal axis of which extends through the centre of the named bore (10) and lies in the horizontal plane through the axis of the lever (6).

7. Mass-measuring and force-measuring device according to claim 6, characterised thereby, that the second plate (9 or 26), additionally to the first hinge formed by the named tape hinge pair (19, 20), displays still a second, tongue-shaped hinge (21 or 27).

8. Mass-measuring and force-measuring device according to claim 7, characterised thereby, that the second hinge (21 or 27) is disposed outside the horizontal plane through the axis of the lever.

9. Mass-measuring and force-measuring device according to claim 7 or 8, characterised thereby, that the second hinge (27), in respect of the flow of force through the plate (26) concerned, is disposed nearer to the lever (6) than the first hinge (19, 20).

10. Mass-measuring and force-measuring device according to claim 7 or 8 characterised thereby, that the second hinge (21), in respect of the flow of force through the plate (9) concerned, is further remote from the lever (6) than the first hinge (19, 20).

11. Mass-measuring and force-measuring device according to one of the claims 1 to 10, characterised thereby, that each plate (8, 9 or 26) consists of an integral plate.

## Revendications

1. Appareil de mesure de masses et de forces comportant un bâti (1), un organe récepteur (2) de la charge, guidé verticalement et parallèlement à lui-même, un système de mesure (3) conçu pour mesurer sans déplacement et des moyens (6 à 9 ou 26), présentant un levier (6), pour transmettre au système de mesure (3) la force à mesurer, le levier (6) étant relié au bâti (1) par l'intermédiaire d'au moins une articulation (12, 19, 20, 27) et à l'organe récepteur (2) de la charge par l'intermédiaire d'au moins deux articulations (12, 14, 19, 20, 21, 27), caractérisé en ce que l'articulation (12, 19, 20, 27), dont il y a au moins une, qui relie le levier (6) au bâti (1), est formée par une portion d'une première plaquette (8, 26) montée, sans possibilité de rotation ni de coulissement relatif, sur le levier (6), et les articulations (12, 14, 19, 20, 21, 27), qui sont au moins au nombre de deux et qui relient le levier (6) à l'organe récepteur de la charge, sont formées par des portions d'une seconde plaquette (9, 26) montée, sans possibilité de rotation ni de coulissement relatif, sur le levier (6).

2. Appareil de mesure de masses et de forces selon la revendication 1, caractérisé en ce que la première et la seconde plaquettes (8, 9 ou 26) sont respectivement fixées sur le levier (6) au moyen d'un ajustement serré formé par elles-mêmes et le levier (6).

3. Appareil de mesure de masses et de forces selon la revendication 2, caractérisé en ce que chaque plaquette (8, 9, 26) présente un perçage (10) qui reçoit une portion du levier (6) et forme avec cette portion de levier l'ajustement serré en question, ainsi qu'au moins un autre perçage (11) pour sa fixation ou bâti (1) ou à l'organe récepteur (2) de la charge.

4. Appareil de mesure de masses et de forces selon l'une des revendications 1 à 3, caractérisé en ce que la première plaquette (8) présente une seule articulation à ruban (12) disposée horizontalement.

5. Appareil de mesure de masses et de forces selon la revendication 4, caractérisé en ce que la seconde plaquette (9) présente deux articulations à ruban (12, 14) parallèles disposées horizontalement.

6. Appareil de mesure de masses et de forces selon la revendication 3, caractérisé en ce que les deux plaquettes (8, 9, ou 26) présentent une fente (18) qui s'étend sur au moins 180° autour du perçage mentionné (10) et en ce qu'elles sont munies d'une paire d'articulations à ruban (19, 20) dont l'axe horizontal commun passe par le centre du perçage mentionné (10) et se trouve dans le plan horizontal passant par l'axe du levier (6).

7. Appareil de mesure de masses et de forces selon la revendication 6, caractérisé en ce que la seconde plaquette (9 ou 26) présente encore, en plus de la première articulation formée par la paire mentionnée d'articulations à ruban (19, 20), une seconde articulation en forme de languette (21 ou 27).

8. Appareil de mesure de masses et de forces selon la revendication 7, caractérisé en ce que la seconde articulation (21 ou 27) se trouve à l'extérieur du plan horizontal passant par l'axe du levier.

9. Appareil de mesure de masses et de forces selon la revendication 7 ou 8, caractérisé en ce que la seconde articulation (27) se trouve, par rapport au flux de force passant par la plaquette correspondante (26), plus près du levier (6) que la première articulation (19, 20).

10. Appareil de mesure de masses et de forces selon la revendication 7 ou 8, caractérisé en ce que la seconde articulation (21) se trouve, par rapport au flux de force passant par la plaquette correspondante (9), plus éloignée du levier (6) que la première articulation (19, 20).

11. Appareil de mesure de masses et de forces selon l'une des revendications 1 à 10, caractérisé en ce que chaque plaquette (8, 9 ou 26) est constituée d'une plaquette d'une seule pièce.

EP 0 195 876 B1

Fig. 1

Fig. 2  Fig. 3  Fig. 4  Fig. 5

Fig. 6  Fig. 7